Europäisches Patentamt

European Patent Office

Office européen des brevets

(11) Numéro de publication: **0 426 907 A1**

## DEMANDE DE BREVET EUROPEEN

(21) Numéro de dépôt: 89202798.8

(22) Date de dépôt: 07.11.89

(51) Int. Cl.⁵: **B60P 3/10, B60F 3/00**

(43) Date de publication de la demande:
15.05.91 Bulletin 91/20

(84) Etats contractants désignés:
AT BE CH DE ES GB GR IT LI LU NL SE

(71) Demandeur: **Belcastro, Salvatore**
**Maison Adonto 4, rue professeur Calmette**
**F-06240 Beausoleil(FR)**

(72) Inventeur: **Belcastro, Salvatore**
**Maison Adonto 4, rue professeur Calmette**
**F-06240 Beausoleil(FR)**

(54) Camionnette à plateau pour transporter un bateau et former un ensemble camping-car.

(57) L'invention a pour objet une camionnette à plateau pour transporter un bateau et former un ensemble camping-car.

La camionnette (1) est une camionette à plateau (2) pouvant, grâce à des moyens de treuillage et de halage, mettre à l'eau ou sortir de l'eau un bateau (9), ledit bateau (9) et la cabine (3) pouvant, grâce à des moyens d'assemblage, former un véhicule aménagé pour le camping.

L'invention s'applique aux véhicules destinés au camping et à la navigation

FIG. 2

EP 0 426 907 A1

## CAMIONNETTE À PLATEAU POUR TRANSPORTER UN BATEAU ET FORMER UN ENSEMBLE CAMPING-CAR

L'invention a pour objet une camionnette à plateau pour transporter un bateau et former un ensemble camping-car intégral, c'est-à-dire un véhicule aménagé pour le camping.

Ladite camionnette peut mettre à l'eau et sortir de l'eau le bateau qui forme la cellule habitable par ses propres moyens.

Il existe, bien évidemment, des camions qui transportent des bateaux, mais l'assemblage du bateau sur le camion ne peut, en fait, permettre une utilisation comme camping-car, l'assemblage entre la camionnette et le bateau qui fait office de cellule habitable, n'est pas adapté au tourisme.

Les assemblages actuels ne se font que par des professionnels spécialisés dans le transport des bateaux. Il est souvent nécessaire d'utiliser des moyens de treuillage ou de grue pour mettre à l'eau ou sortir de l'eau les bateaux. Dans les déplacements routiers, l'assemblage camion/bateau a un coefficient de pénétration dans l'air très important. il n'y a pas d'emboitement de la cabine du camion avec la proue du bateau.

L'invention concerne une camionnette à plateau pouvant s'assembler rapidement et aisément avec un bateau, qui sert également de cellule habitable, quel que soit le mode de déplacement sur l'eau ou sur terre et ce, pour former un ensemble complet pour camping-car. L'invention comprend :

- Une camionnette à plateau dont l'arrière de la cabine est profilé pour faire office de déflecteur et de partie femelle dans laquelle vient s'encastrer la proue du bateau. Ledit déflecteur peut être rapporté ou amovible, il peut être fixé par collage ou rivetage sur la partie arrière de la cabine; il peut ainsi être changé pour s'adapter aux différentes formes de bateaux.

- Des moyens faisant office de rouleaux facilitent le glissement du bateau et sont disposés sur le plateau.

- Des moyens de treuillage, de halage assurent les manoeuvres d'entrée et de sortie du bateau sur le plateau.

- Les moyens de treuillage et de halage sont formés par un moteur et plusieurs jeux de câbles qui assurent le déplacement du bateau sur le plateau de l'avant vers l'arrière ou de l'arrière vers l'avant.

- Le bateau a une carène relativement plate du type multicoque.

- La proue dudit bateau vient s'encastrer dans la partie arrière de la cabine

Selon un mode de réalisation préfère, le bateau est un trimaran.

Le pourtour du déflecteur est pourvu de joints d'assemblage et d'étanchéité. Ces joints assurent la continuité entre la cabine et le bateau améliorant le CX.

Les moyens de treuillage et de halage sont composés d'un treuil électrique disposé sur le plateau de la camionnette. Ce treuil est solidaire, par une extrémité, de trois câbles, deux câbles servent de halage et un câble sert à descendre le bateau du plateau par l'intermédiaire d'un moyen agissant comme une poulie d'inversion, l'autre extrémité des trois câbles est fixée à des anneaux d'ancrage solidaires de la coque du bateau.

Les dessins ci-joints sont donnés à titre d'exemples indicatifs et non limitatifs. Ils représentent un mode de réalisation préféré selon l'invention. Ils permettront de comprendre aisément l'invention.

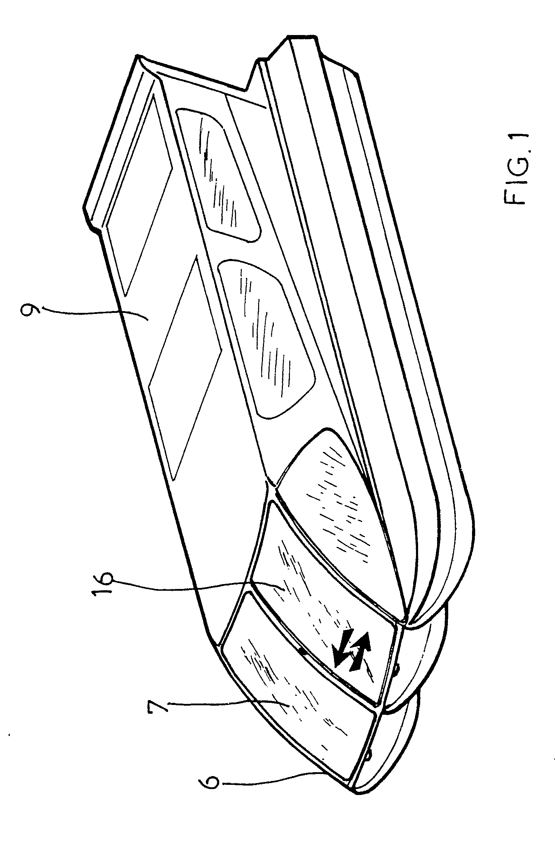

La figure 1 est une vue en perspective du bateau qui vient s'adapter sur la camionnette.

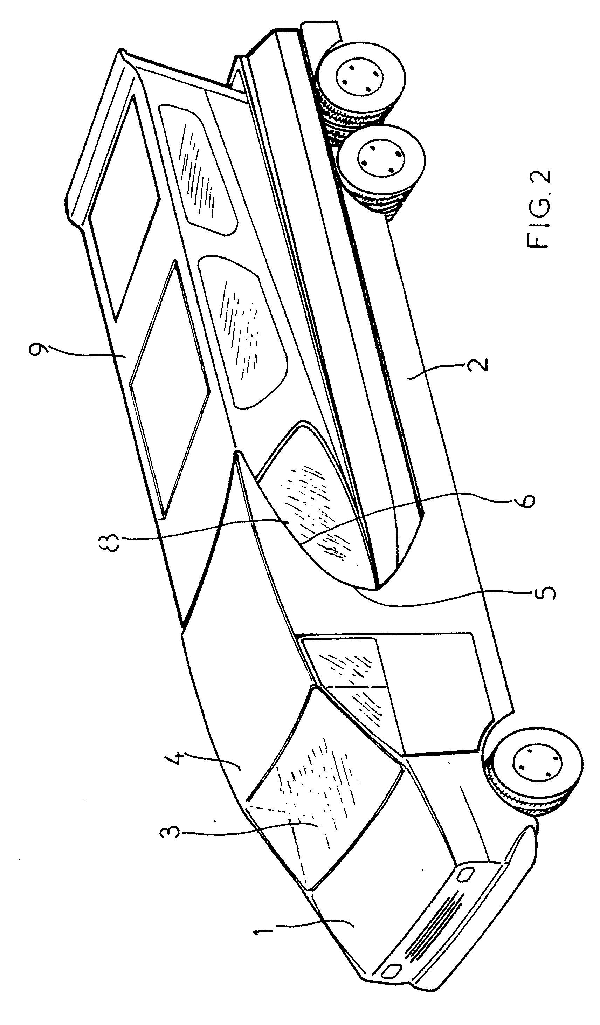

La figure 2 est une vue en perspective de la camionnette et du bateau assemblés entre-eux.

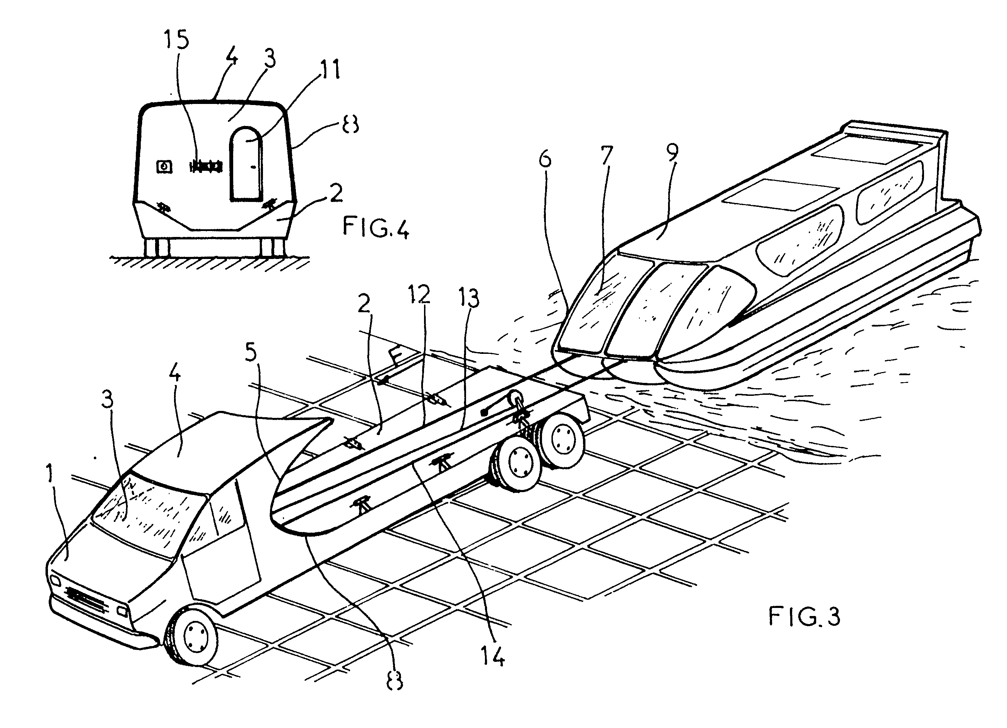

La figure 3 est une vue en perspective de la camionnette et du bateau en cours de halage.

La figure 4 est une vue arrière de la cabine mettant en évidence la porte de communication de la cabine avec la baie ouvrante disposée à la proue du bateau.

La figure 5 est une vue schématique du bateau de côté pour mettre en evidence les joints d'assemblage.

La figure 6 est une vue schématique de côté de la cabine et du bateau mettant en evidence leurs joints d'assemblage respectifs.

La camionnette 1 est une camionnette à plateau 2. L'arrière de la cabine 3 peut recevoir un déflecteur amovible 4 dont le carénage forme une partie femelle 5 qui s'adapte à la partie mâle correspondante 6 qui forme la proue 7 du bateau 9. Le déflecteur amobile 4 est pourvu de joints d'assemblage 8 qui viennent s'assembler avec les joints d'assemblage correspondants 8 situés sur la proue 7 du bateau 9.

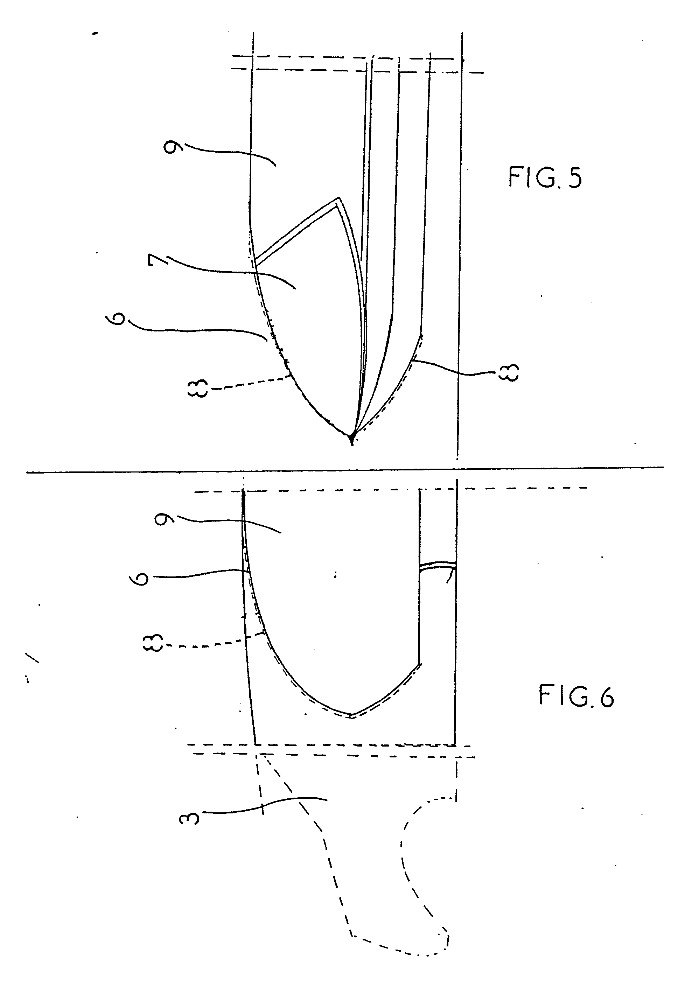

Ledit déflecteur 4 peut se fixer sur la cabine 3 par un moyen de fixation connue, par collage ou rivetage. Ces joints d'assemblage 8 sont représentés sur les figures 5 et 6. ils ont une forme en W. Ces joints assurent l'étanchéité entre la cabine 3 et le bateau 9 et font office de blocs silenceurs évitant ainsi les bruits de carrosserie.

Le plateau 2 est pourvu de rouleaux 10 qui facilient le glissement du bateau 9. Ces rouleaux 10 peuvent être disposés horizontalement ou former par paires des éléments en V à intervalles réguliers qui font office de moyens de guidage à la carène dudit bateau 9.

Au niveau de la porte 11 de la cabine 3 est disposé un treuil électrique de halage. Ce treuil 15 est à trois compartiments pour trois câbles 12, 13, 14. Les câbles 12, 14 servent au halage. Le câble 13 sert à descendre le bateau 9 pour sa mise à l'eau. Le câble 13 agit en sens inverse par l'intermédiaire d'une poulie d'inversion de sens et en étant enroulé en sens inverse sur ledit treuil. Ces câbles 12,13,14 sont fixés par une extrémité au treuil et par leur autre extrémité à des anneaux d'ancrage solidaire du bateau 9

L'arrière de la cabine 3 permet de brancher l'électricité et les autres branchements techniques nécessaires au bateau 9. Une porte 11 à l'arrière, permet de communiquer entre ladite cabine 3 et le bateau 9.

A cet effet, un des panneaux 16 avant ou baie de la proue 7 peut s'ouvrir pour permettre la communication, lorsque la cabine 3 et le bateau sont assemblés. L'ouverture des panneaux 16 se fait par coulissement d'un des panneaux l'un sur l'autre.

### REFERENCES

1. Camionnette
2. plateau
3. Cabine
4. déflecteur amovible
5. partie femelle
6. partie mâle
7. proue
8. joints d'assemblage
9. bateau
10. rouleau
11. Porte
12. Câble
13. Cable
14. Cable
15. treuil électrique
16 panneau ou baie avant

**Revendications**

1. Camionnette pour transporter un bateau (9) adapté au plateau (2), pour former un ensemble complet camping-car pouvant, grâce à des moyens de treuillage et de halage, mettre à l'eau ou sortir de l'eau un bateau (9), ledit bateau (9) et la cabine (3) pouvant, grâce à des moyens d'assemblage, former un véhicule aménagé pour l'activité touristique, l'arrière de la cabine (3) est profilé pour faire office de déflecteur (4) et de partie femelle (5) dans laquelle la partie mâle correspondante (6) que forme la proue (7) du bateau (9), vient s'encastrer, grâce aux moyens de treuillage et d'assemblage, un déflecteur (4) peut être une partie amovible qui vient s'adapter sur la partie arrière de la cabine (3) par un moyen de fixation connu, collage ou rivetage caractérisée par le fait
que les moyens d'assemblage sont des joints d'assemblage (8) qui sont disposés sur le pourtour de la partie femelle (5) du carénage du déflecteur (4) et sur le pourtour de la partie mâle correspondante (6) que forme la proue du bateau (9).

2. Camionnette selon l'une quelconque des revendications 1 ou 4 caractérisée par le fait
que les joints d'assemblage ont une forme en W ; ils assurent l'étanchéité entre la cabine (3) et le bateau (9) et font également office de blocs silenceurs.

3. Camionnette selon la revendication 1 caractérisée par le fait
que les moyens de treuillage et de halage sont formés par un treuil électrique (15) qui comprend trois compartiments pour trois câbles (12, 13, 14); les câbles (12, 14) servent au halage ; le câble (13) sert à descendre le bateau (9) pour sa mise à l'eau, le câble 13 agit, en sens inverse, par l'intermédiaire d'une poulie d'inversion de sens et en étant enroulé en sens inverse sur ledit treuil ; ces câbles (12, 13, 14) sont fixés par une extrémité au treuil et par leur autre extrémité à des anneaux d'ancrage solidaire du bateau (9).

4. Camionnette selon la revendication 1 caractérisée par le fait
qu'une porte (11) à l'arrière de la cabine (3) permet de communiquer entre ladite cabine (3) et le bateau (9) ; un des panneaux (16) avant ou baie de la proue (7) peut s'ouvrir pour permettre la communication , lorsque la cabine (3) et le bateau (9) sont assemblés.

FIG.1

FIG. 2

FIG.3

FIG.4

FIG. 5

FIG. 6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | US-A-3719244 (APECO CORPORATION) <br> * abrégé; figures * <br> --- | 1-4 | B60P3/10 <br> B60F3/00 |
| A | US-A-3885693 (J. L. HAPTONSTALL) <br> * colonne 2, ligne 63 - colonne 3, ligne 25; revendications 1, 2; figures * <br> --- | 1, 3 | |
| A | GB-A-2187681 (EISENWERKE KAISERSLAUTERN GOPPNER GMBH) <br> * le document en entier * <br> --- | 1, 3 | |
| A | US-A-3831208 (E. L. SMITH) <br> * le document en entier * <br> --- | 1 | |
| A | US-A-3760764 (W. W. JONES) <br> * le document en entier * <br> --- | 1 | |
| A | US-A-4261613 (T. E. ALFORD) <br> * figures 6, 13-15 * <br> --- | 1 | |
| E | FR-A-2633232 (S. BELCASTRO) <br> * le document en entier * <br> ----- | 1-4 | **DOMAINES TECHNIQUES RECHERCHES (Int. Cl.5 )** <br><br> B60F <br> B60P |

Le présent rapport a été établi pour toutes les revendications

| Lieu de la recherche | Date d'achèvement de la recherche | Examinateur |
|---|---|---|
| LA HAYE | 11 JUILLET 1990 | FRANKS B.G. |

EPO FORM 1503 03.82 (P0402)